# EUROPÄISCHE PATENTSCHRIFT

(11) **EP 2 074 834 B1**
(45) Veröffentlichungstag und Bekanntmachung des Hinweises auf die Patenterteilung: **15.03.2017**
(21) Anmeldenummer: 08700966.8
(22) Anmeldetag: 03.01.2008
(51) Int. Cl.: H04Q 1/14

(54) **VERTEILEREINRICHTUNG EINER TELEKOMMUNIKATIONSANLAGE**
DISTRIBUTOR DEVICE IN A TELECOMMUNICATION INSTALLATION
DISPOSITIF DE RÉPARTITION D'UNE INSTALLATION DE TÉLÉCOMMUNICATION

(30) Priorität: 24.01.2007 DE 202007001344 U
(43) Veröffentlichungstag der Anmeldung: 01.07.2009
(73) Patentinhaber: CCS Technology, Inc., Wilmington, DE 19803 (US)
(72) Erfinder: BREUER-HECKEL, Mike, 44143 Dortmund (DE); LAPP, Oliver, 42399 Wuppertal (DE)
(74) Vertreter: Sturm, Christoph
(86) Internationale Anmeldenummer: PCT/EP2008/000008
(87) Internationale Veröffentlichungsnummer: WO 2008/089878

(56) Entgegenhaltungen:
- EP-A- 0 364 658
- WO-A-01/97532
- US-A- 5 800 215

## Beschreibung

Die Erfindung betrifft eine Verteilereinrichtung einer Telekommunikationsanlage gemäß dem Oberbegriff des Anspruchs 1 bzw. 10.

Die DE 100 29 870 A1 offenbart eine als Verteilerblock ausgebildete Verteilereinrichtung mit einer als Aufnahmewanne ausgebildeten Aufnahmeeinrichtung, in welcher sandwichartig übereinander mehrere Funktionselemente sowie Drahtführungselemente positioniert sind. Die Funktionselemente verfügen an einer Vorderseite über als IDC-Kontakte ausgebildete Anschlusselemente für den Anschluss von Kabeladern bzw. Datensignalleitungen. Die Drahtführungselemente weisen Drahtführungskanäle zur Führung der Datensignalleitungen auf. Weiterhin ist es aus der DE 100 29 870 A1 bereits bekannt, in die Verteilereinrichtung sogenannte xDSL-Splittereinrichtungen zu integrieren, die an einer Rückseite in die Funktionselemente einsteckbar sind, um über die Datensignalleitungen zu leitende, niederfrequente Sprachdatensignale und hochfrequente Rechnerdatensignale zusammenzuführen bzw. voneinander zu trennen. Nach der DE 100 29 870 A1 werden an die IDC-Kontakte der Funktionselemente sämtliche Datensignalleitungen angeschlossen, nämlich sogenannte DSLAM-Datensignalleitungen, die der Übertragung der hochfrequenten Rechnerdatensignale dienen, sogenannte VOICE-Datensignalleitungen, die der Übertragung der niederfrequenten Sprachdatensignale dienen, sowie sogenannte LINE-Datensignalleitungen, die der Übertragung der kombinierten Sprachdaten-Rechnerdatensignale dienen. Bedingt dadurch, dass beim Verteilerblock gemäß DE 100 29 870 A1 sämtliche Datensignalleitungen an die IDC-Kontakte der Funktionselemente angeschlossen werden, kann sich eine unübersichtliche Führung für die Datensignalleitungen ergeben.

Um eine übersichtlichere Führung der Datensignalleitungen zu gewährleisten, sind aus der Praxis bereits Verteilereinrichtungen mit integrierten xDSL-Splittereinrichtungen bekannt, bei welchen die IDC-Kontakte der Funktionselemente ausschließlich dem Anschluss der LINE-Datensignalleitungen sowie dem Anschluss der VOICE-Datensignalleitungen dienen. Zum Anschluss der DSLAM-Datensignalleitungen sind der Aufnahmeeinrichtung Steckverbinderelemente zugeordnet, an welche die DSLAM-Datensignalleitungen über entsprechende Stecker angeschlossen werden können. Hierdurch ist es möglich, eine übersichtlichere Führung für die Datensignalleitungen zu gewährleisten.

Bedingt durch Bestrebungen, an Verteilereinrichtungen eine zunehmend größere Anzahl von Datensignalleitungen bei einem immer geringer werdenden Bauraum anzuschließen, bereitet insbesondere die Handhabung der Datensignalleitungen Schwierigkeiten, die mit den IDC-Kontakten der Funktionselemente zu kontaktieren sind. Dies gilt einerseits für Verteilereinrichtungen mit integrierten xDSL-Splittereinrichtungen und andererseits für Verteilereinrichtungen ohne xDSL-Splittereinrichtungen. Es besteht daher ein Bedarf an einer Verteilereinrichtung mit einem Datensignalleitungsmanagement, dass es ermöglicht, selbst bei beengten Platzverhältnissen eine immer größer werdende Anzahl an anzuschließenden Datensignalleitungen strukturiert handzuhaben.

Hiervon ausgehend liegt der vorliegenden Erfindung das Problem zu Grunde, eine neuartige Verteilereinrichtung einer Telekommunikationsanlage zu schaffen. Dieses Problem wird durch eine Verteilereinrichtung mit den Merkmalen des Anspruchs 1 gelöst. Die erfindungsgemäße Verteilereinrichtung weist mindestens eine Aderbündelabfangeinrichtung auf, wobei an der oder jeder Aderbündelabfangeinrichtung übereinander bzw. nebeneinander mehrere Aderbündel eines Hauptkabels abfangbar sind, wobei die oder jede Aderbündelabfangeinrichtung einen Grundkörper aufweist, und wobei die oder jede Aderbündelabfangeinrichtung derart an einer Seitenwand der Aufnahmeeinrichtung lösbar befestigbar ist, dass sich der Grundkörper in etwa parallel zu der jeweiligen Seitenwand der Aufnahmeeinrichtung erstreckt.

Die erfindungsgemäße Verteilereinrichtung ermöglicht selbst bei beengten Platzverhältnissen eine strukturierte Handhabung einer hohen Anzahl von Datensignalleitungen, die an IDC-Kontakte der Verteilereinrichtung anzuschließen sind. Hierbei spielen die Aderbündelabfangeinrichtungen, die der Abfangung von Aderbündeln von Hauptkabeln dienen, eine wesentliche Rolle. So können an einer Aderbündelabfangeinrichtung die Aderbündel eines Hauptkabels strukturiert abgefangen und ausgehend von denselben die Datensignalleitungen der Aderbündel den IDC-Kontakten der Funktionselemente strukturiert zugeführt werden.

Vorzugsweise ist an beiden sich gegenüberliegenden Seitenwänden der Aufnahmeeinrichtung jeweils eine Aderbündelabfangeinrichtung befestigbar, um an der jeweiligen Aderbündelabfangeinrichtung alle Aderbündel desjenigen Hauptkabels abzufangen, deren Datensignalleitungen über an dieser Seitenwand mündende Drahtführungskanäle der Drahtführungselemente den Anschlusselementen der Funktionselemente zuführbar sind.

Nach einer vorteilhaften Weiterbildung der Erfindung sind die Hauptkabel an einer Hauptkabelabfangeinrichtung abfangbar, wobei die Hauptkabelabfangeinrichtung an einem Verteilergestell insbesondere über Schrauben lösbar befestigbar ist, wobei die Hauptkabelabfangeinrichtung Einhängabschnitte für die Aufnahmeeinrichtung aufweist, um die Aufnahmeeinrichtung lösbar in die am Verteilergestell befestigte Hauptkabelabfangeinrichtung einzuhängen, und wobei die in die Hauptkabelabfangeinrichtung eingehängte Aufnahmeeinrichtung am Verteilergestell insbesondere über Schrauben lösbar befestigbar ist.

Bevorzugte Weiterbildungen der Erfindung ergeben sich aus den Unteransprüchen und der nachfolgenden Beschreibung. Ausführungsbeispiele werden anhand der Zeichnung näher erläutert. In der Zeichnung zeigt:
- Fig. 1: eine an einem Verteilergestell befestigte, erfindungsgemäße Verteilereinrichtung in einer perspektivischen Seitenansicht von vorne zusammen mit Datensignalleitungen;
- Fig. 2: die Verteilereinrichtung der Fig. 1 in einer perspektivischen Draufsicht von hinten;
- Fig. 3:: die Verteilereinrichtung der Fig. 1, 2 in einer weiteren perspektivischen Draufsicht von hinten;
- Fig. 4:: ein Detail der Anordnung der Fig. 1 bis 3, nämlich eine an dem Verteilergestell befestigte Hauptkabelabfangeinrichtung sowie Aderbündelabfangeinrichtungen in einer perspektivischen Ansicht von vorne zusammen mit Hauptkabeln und Datensignalleitungen;
- Fig. 5:: das Detail der Fig. 4 in einer perspektivischen Ansicht von hinten;
- Fig. 6:: ein weiteres Detail der Anordnung der Fig. 1 bis 3, nämlich eine Aderbündelabfangeinrichtung in einer perspektivischen Ansicht zusammen mit einem Hauptkabel und Datensignalleitungen;
- Fig. 7:: eine Aderbündelabfangeinrichtung in perspektivischer Alleindarstellung;
- Fig. 8:: eine Hauptkabelabfangeinrichtung in perspektivischer Alleindarstellung;
- Fig. 9:: eine alternative Aderbündelabfangeinrichtung in perspektivischer Alleindarstellung; und
- Fig. 10:: eine weitere alternative Aderbündelabfangeinrichtung in zwei unterschiedlichen perspektivischen Alleindarstellungen.

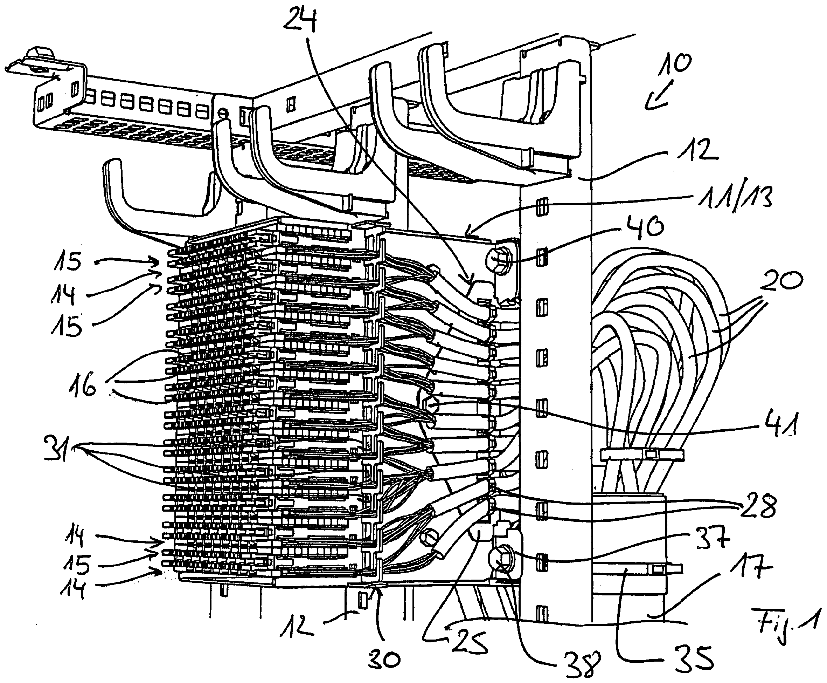

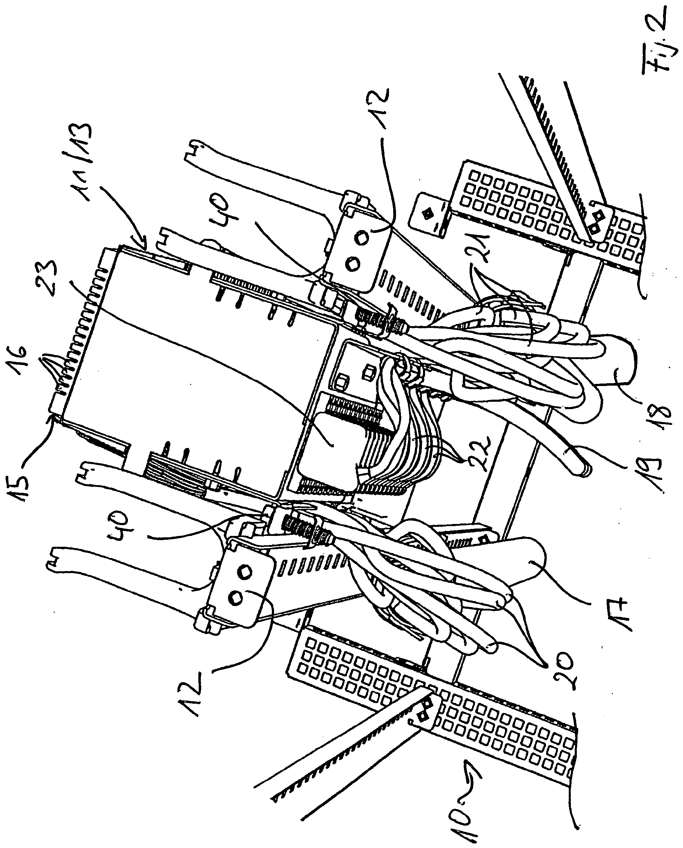

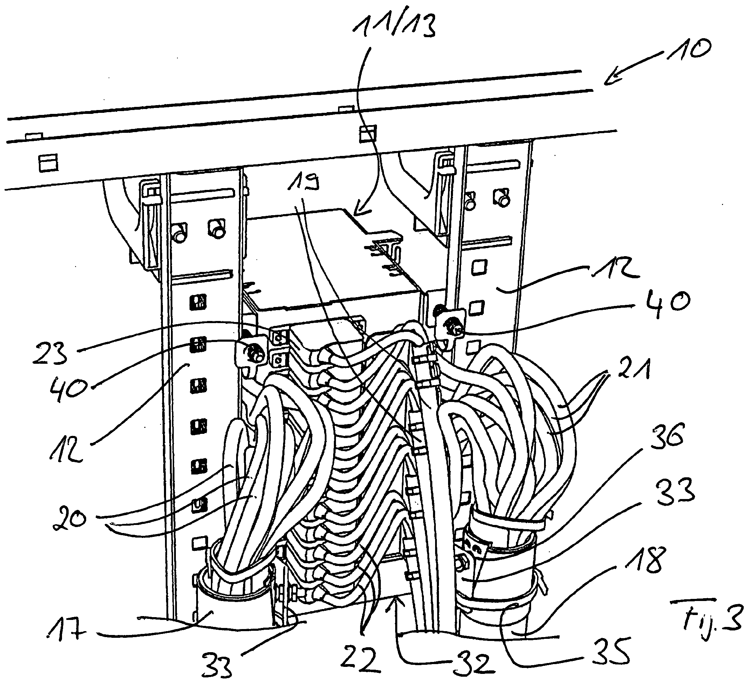

Fig. 1 bis 3 zeigen einen Ausschnitt aus einer Telekommunikationsanlage im Bereich eines Verteilergestells 10 und einer an dem Verteilergestell 10 befestigten, als Verteilerblock 11 ausgebildeten, erfindungsgemäßen Verteilereinrichtung. Bei dem Verteilergestell 10 handelt es sich im gezeigten Ausführungsbeispiel um ein Montagegestell eines Kabelverzweigergehäuses.

Der Verteilerblock 11 ist an zwei vertikal verlaufenden Streben 12 des Verteilergestells 10 montiert, wobei der Verteilerblock 11 eine vorzugsweise als Aufnahmewanne ausgebildete Aufnahmeeinrichtung 13 umfasst, in der sandwichartig übereinander mehrere Drahtführungselemente 14 sowie Funktionselemente 15 positioniert sind. Die Funktionselemente 15 verfügen über als IDC-Kontakte ausgebildete Anschlusselemente 16 zum Anschluss von Datensignalleitungen.

Die Drahtführungselemente 14 verfügen über Drahtführungskanäle, die einen gebogenen Verlauf aufweisen, wobei die Drahtführungskanäle einerseits oberhalb bzw. unterhalb der als IDC-Kontakte ausgebildeten Anschlusselemente 16 der Funktionselemente 15 und andererseits im Bereich einer Seitenwand des Verteilerblocks 11 bzw. der Aufnahmeeinrichtung 13 münden. Über die Drahtführungskanäle der Drahtführungselemente 14 können Datensignalleitungen den IDC-Kontakten der Funktionselemente 15 zugeführt werden.

Im Ausführungsbeispiel der Fig. 1 bis 3 sind an den Verteilerblock 11 Datensignalleitungen von mehreren Hauptkabeln anschließbar, nämlich erstens LINE-Datensignalleitungen eines LINE-Hauptkabels 17, zweitens VOICE-Datensignalleitungen eines VOICE-Hauptkabels 18 sowie drittens DSLAM-Datensignalleitungen mehrerer DSLAM-Hauptkabel 19. Innerhalb jedes Hauptkabels 17, 18 und 19 sind die Datensignalleitungen in Form mehrerer Aderbündel 20, 21 und 22 gruppiert, wobei in LINE-Aderbündeln 20 verlaufende LINE-Datensignalleitungen über eine erste Seite des Verteilerblocks 11 den an einer Vorderseite desselben positionierten IDC-Kontakten der Funktionselemente 15 zugeführt und mit denselben kontaktiert werden, wobei in VOICE-Aderbündeln 21 verlaufende VOICE-Datensignalleitungen über eine zweite Seite des Verteilerblocks 11 den an der Vorderseite desselben positionierten IDC-Kontakten der Funktionselemente 15 zugeführt und an denselben angeschlossen werden, und wobei in DSLAM-Aderbündeln 22 verlaufende DSLAM-Datensignalleitungen über Stecker 23 an einer Rückseite des Verteilerblocks 11 kontaktiert werden.

Die LINE-Datensignalleitungen des LINE-Hauptkabels 17 dienen der Übertragung kombinierter Sprachdaten-Rechnerdatensignale. Die VOICEDatensignalleitungen des VOICE-Hauptkabels 18 dienen ausschließlich der Übertragung niederfrequenter Sprachdatensignale. Die DSLAM-Datensignalleitungen der DSLAM-Hauptkabel 19 dienen hingegen ausschließlich der Übertragung hochfrequenter Rechnerdatensignale.

Um einerseits die kombinierten Sprachdaten-Rechnerdatensignale in Sprachdatensignale und Rechnerdatensignale aufzutrennen und andererseits Rechnerdatensignale und Sprachdatensignale zu kombinierten Sprachdaten-Rechnerdatensignalen zusammenzuführen, weist der Verteilerblock 11 neben den Funktionselementen 15 und Drahtführungselementen 14 weiterhin nichtdargestellte xDSL-Splittereinrichtungen auf, die in den Verteilerblock 11 integriert sind. So sind die xDSL-Splittereinrichtungen vorzugsweise lösbar mit den Funktionselementen des Verteilerblocks unmittelbar kontaktiert.

Bereits an dieser Stelle sei darauf hingewiesen, dass die Erfindung nicht auf den Einsatz an Verteilerblöcken mit integrierten xDSL-Splittereinrichtungen beschränkt ist. Vielmehr kann die Erfindung überall dort zum Einsatz kommen, wo an Verteilerblöcken bei beengten Raumverhältnissen eine hohe Anzahl an Datensignalleitungen anzuschließen sind. Die Erfindung ist jedoch besonders vorteilhaft bei dem in Fig. 1 bis 3 dargestellten Verteilerblock mit integrierten xDSL-Splittereinrichtungen verwendbar.

Wie bereits ausgeführt, werden im Anwendungsfall der Fig. 1 bis 3 die LINE-Datensignalleitungen des LINE-Hauptkabels 17 den als IDC-Kontakten ausgebildeten Anschlusselementen 16 der Funktionselemente 15 über eine erste Seite des Verteilerblocks 11 zugeführt. Hingegen werden die VOICE-Datensignalleitungen des VOICE-Hauptkabels 18 den als IDC-Kontakten ausgebildeten Anschlusselementen 16 der Funktionselemente 15 über eine zweite Seite des Verteilerblocks 11 zugeführt.

Um nun die in LINE-Aderbündeln 20 gruppierten LINE-Datensignalleitungen des LINE-Hauptkabels 17 sowie die zu VOICE-Aderbündeln 21 gruppierten VOICE-Datensignalleitungen des VOICE-Hauptkabels 18 selbst bei beengten Platzverhältnissen am Verteilerblock 11 den als IDC-Kontakten ausgebildeten Anschlusselementen 16 der Funktionselemente 15 strukturiert zuführen zu können, verfügt im Ausführungsbeispiel der Fig. 1 bis 3 der Verteilerblock 10 im Bereich jeder Seite über eine Aderbündelabfangeinrichtung 24.

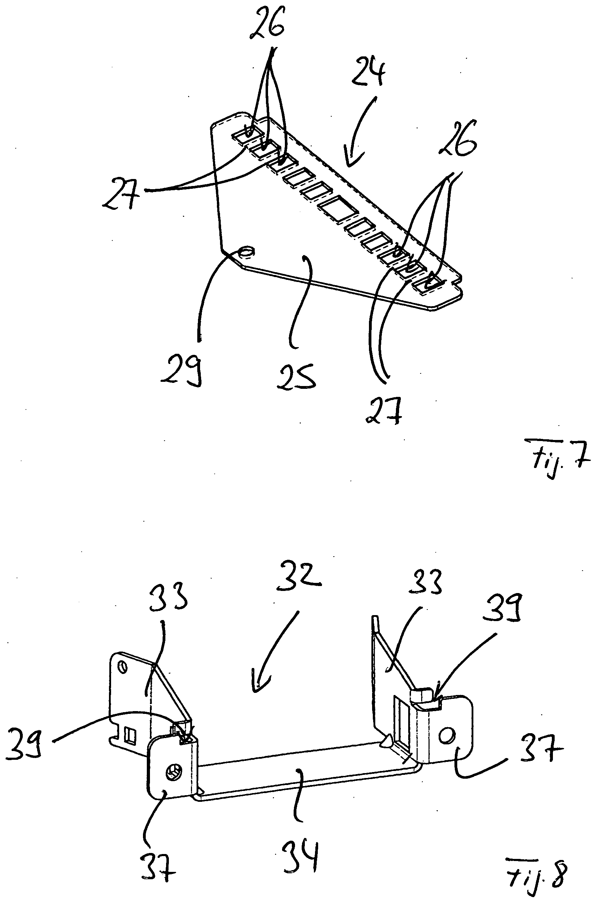

Sämtliche LINE-Aderbündel 20 des LINE-Hauptkabels 17 sind an einer ersten Aderbündelabfangeinrichtung 24 und sämtliche VOICE-Aderbündel 21 des VOICE-Hauptkabels 18 sind an einer zweiten Aderbündelabfangeinrichtung 24 abfangbar. Fig. 7 zeigt eine derartige Aderbündelabfangeinrichtung 24 in Alleindarstellung.

Im Bereich einer Aderbündelabfangeinrichtung 24 sind die jeweiligen Aderbündel 20 bzw. 21 der Hauptkabel 17 bzw. 18 übereinander bzw. nebeneinander abfangbar, wobei eine Aderbündelabfangeinrichtung 24 über einen insbesondere plattenförmigen Grundkörper 25 verfügt. In den plattenförmigen Grundkörper 25 der Aderbündelabfangeinrichtungen 24 sind mehrere Ausnehmungen 26 eingebracht, die in einer Reihe positioniert sind und sich über die Breite des plattenförmigen Grundkörpers verteilen. Zwischen zwei benachbarten Ausnehmungen 26 sind Materialstege 27 ausgebildet.

Die Aderbündel 20, 21 sind derart an der jeweiligen Aderbündelabfangeinrichtung 24 abfangbar, dass durch die Ausnehmungen 26 unter Umschlingung der Aderbündel 20, 21 Kabelbinder 28 führbar sind. Eine unter Verwendung eines Kabelbinders 28 an einer Bündeladerabfangeinrichtung 24 abgefangene Aderbündel 20 bzw. 21 liegt in abgefangenem Zustand an dem Materialsteg 27 an, der sich zwischen den Ausnehmungen 26 befindet, durch den der jeweilige Kabelbinder 28 geführt ist.

Im Ausführungsbeispiel der Fig. 1 bis 3 sind an jeder Aderbündelabfangeinrichtung 24 alle Aderbündel 20, 21 des jeweiligen Hauptkabels 17 bzw. 18 abfangbar, und zwar derart, dass die Aderbündel 20, 21 des jeweiligen Hauptkabels 17, 18 allesamt übereinander bzw. nebeneinander positioniert sind. Jede der Aderbündelabfangeinrichtungen 24 ist zusammen mit den an derselben abgefangenen Aderbündeln 20, 21 an einer Seitenwand der Aufnahmeeinrichtung 13 des Verteilerblocks 12 lösbar befestigbar, wobei sich dann der plattenförmige Grundkörper 25 der jeweiligen Aderbündelabfangeinrichtung 24 in etwa parallel zu der entsprechenden Seitenwand der Aufnahmeeinrichtung 13 erstreckt.

Dann, wenn die Aderbündelabfangeinrichtungen 24 an der Aufnahmeeinrichtung 13 des Verteilerblocks 11 befestigt sind, liegen die plattenförmigen Grundkörper 25 derselben an der jeweiligen Seitenwand der Aufnahmeeinrichtung 13 flächig an. Die Relativposition der Aderbündelabfangeinrichtungen 24 an den Seitenwänden der Aufnahmeeinrichtung 13 wird durch eine Ausnehmung 29 der plattenförmigen Grundkörper 25 definiert, durch die sich in montiertem Zustand ein schraubenartiger Vorsprung der jeweiligen Seitenwand der Aufnahmeeinrichtung 13 erstreckt, um so die jeweilige Aderbündelabfangeinrichtung 24 unter Verwendung einer Mutter 41 lösbar an der jeweiligen Seitenwand der Aufnahmeeinrichtung 13 zu befestigen.

Im gezeigten Ausführungsbeispiel ist demnach an beiden sich gegenüberliegenden Seitenwänden der Aufnahmeeinrichtung 13 des Verteilerblocks 11 jeweils eine Aderbündelabfangeinrichtung 24 befestigt, wobei an einer Aderbündelabfangeinrichtung 24 sämtliche LINE-Aderbündel 20 des LINE-Hauptkabels 17 und an einer zweiten Aderbündelabfangeinrichtung 24 sämtliche VOICE-Aderbündel 21 des VOICE-Hauptkabels 18 abfangbar sind.

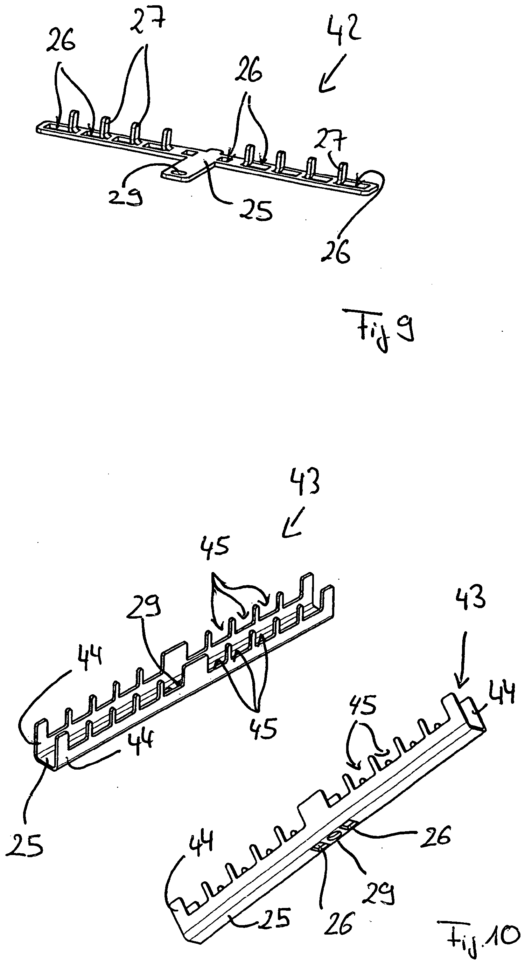

Fig. 9 und 10 zeigen alternative Ausgestaltungen von Aderbündelabfangeinrichtungen 42, 43 zur Abfangung der LINE-Aderbündel 20 des LINE-Hauptkabels 17 und der VOICE-Aderbündel 21 des VOICE-Hauptkabels 18.

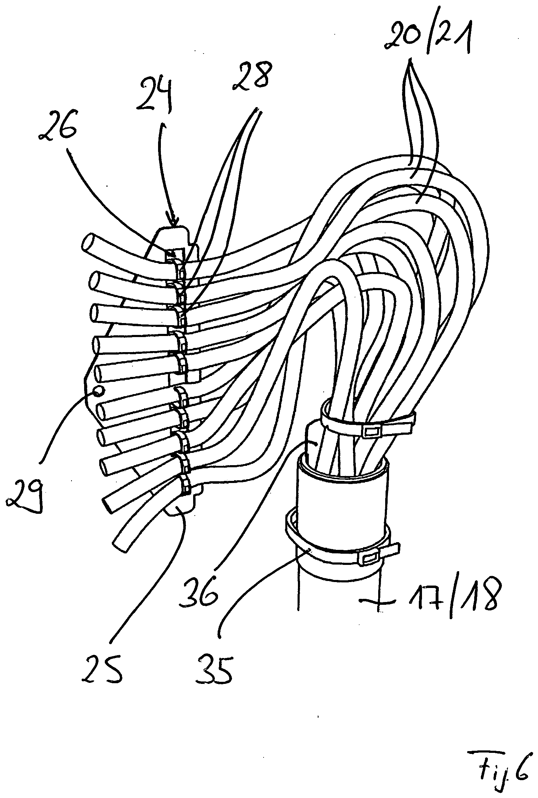

So weist die Aderbündelabfangeinrichtung 42 der Fig. 9 ebenso wie die Aderbündelabfangeinrichtung 24 der Fig. 1 bis 8 einen Grundkörper 25 auf, in den mehrere Ausnehmungen 26 eingebracht sind, wobei die Ausnehmungen 26 in einer Reihe positioniert sind und sich über die Breite des Grundkörpers 25 verteilen. Im Bereich jeder Ausnehmung ist ein Materialsteg 27 ausgebildet, an dem eine abzufangende Aderbündel in abgefangenem Zustand anliegt. Zur Abfangung von Aderbündeln sind Kabelbinder unter Umschlingung der jeweiligen Aderbündel sowie unter Umschlingung des jeweiligen Materialstegs 27, der eine geringfügig kleinere Höhe als die abzufangende Aderbündel aufweist, durch die Ausnehmungen 26 führbar. Die Aderbündelabfangeinrichtung 42 ist wiederum derart an einer Seitenwand der Aufnahmeeinrichtung 13 lösbar befestigbar, dass sich der Grundkörper 25 in etwa parallel zu einer Seitenwand der Aufnahmeeinrichtung erstreckt und flächig an der jeweiligen Seitenwand der Aufnahmeeinrichtung anliegt. Hinsichtlich weiterer Details wird auf die Ausführungen zur Aderbündelabfangeinrichtung 24 der Fig. 1 bis 8 verweisen.

Auch die Aderbündelabfangeinrichtung 43 der Fig. 10 weist einen Grundkörper 25 auf, der sich in etwa parallel zu einer Seitenwand der Aufnahmeeinrichtung des Verteilerblocks erstreckt. In Fig. 10 sind Ausnehmungen 45 zur Abfangung und Führung der Aderbündel in gegenüber dem Grundkörper 25 um in etwa 90° abgewinkelte Abschnitte 44 eingebracht. Die Aderbündelabfangeinrichtung 43 der Fig. 10 verfügt im Bereich des Grundkörpers 25 benachbart zur Ausnehmung 29, welche die Relativposition der Aderbündelabfangeinrichtungen 43 an den Seitenwänden der Aufnahmeeinrichtung 13 definiert, über die Ausnehmungen 26, durch die Kabelbinder führbar sind. Mit jedem Kabelbinder können gleichzeitig mehrere, hier vier, Aderbündel, die in die Ausnehmungen 45 der Abschnitte 44 eingelegt sind, abgefangen werden. In einem an der Aufnahmeeinrichtung befestigten Zustand der Aderbündelabfangeinrichtung 43 liegt entweder der Grundkörper 25 flächig an der jeweiligen Seitenwand der Aufnahmeeinrichtung an, oder die Abschnitte 44 liegen mit ihren Enden an der Seitenwand der Aufnahmeeinrichtung an.

Die gemäß Fig. 1 bis 8 in den abgefangenen Aderbündeln verlaufenden Datensignalleitungen sind nach Abfangung im Bereich einer Aderbündelabfangeinrichtung über die an der entsprechenden Seitenwand mündenden Drahtführungskanäle der Drahtführungselemente 14 den Anschlusselementen 16 der Funktionselemente 15 zuführbar, um an denselben angeschlossen zu werden. Die sich zwischen der Aderbündelabfangeinrichtung und den Drahtführungselementen erstreckenden Abschnitte der in den abgefangenen Aderbündeln verlaufenden Datensignalleitungen sind an einer der jeweiligen Seitenwand zugeordneten Führungseinrichtung 30 führbar. Die Führungseinrichtung 30 für die Datensignalleitungen verfügt über mehrere Einfädelabschnitte 31, wobei die jeweiligen Datensignalleitungen nach Abfangung der jeweiligen Aderbündel an der jeweiligen Aderbündelabfangeinrichtung sowie nach dem Anschließen derselben an den Anschlusselementen 16 der Funktionselemente 15 in die Einfädelabschnitte 31 der jeweiligen Führungseinrichtung 30 einfädelbar sind.

Neben den Aderbündeln 20 sowie 21, die im LINE-Hauptkabel 17 sowie im VOICE-Hauptkabel 18 verlaufen, ist auch das LINE-Hauptkabel 17 sowie das VOICE-Hauptkabel 18 als solches abfangbar. Hierzu dient eine Hauptkabelabfangeinrichtung 32, die in Fig. 8 in Alleindarstellung gezeigt ist. Die Hauptkabelabfangeinrichtung 32 verfügt über zwei Abfangabschnitte 33, die über einen Quersteg 34 miteinander verbunden sind.

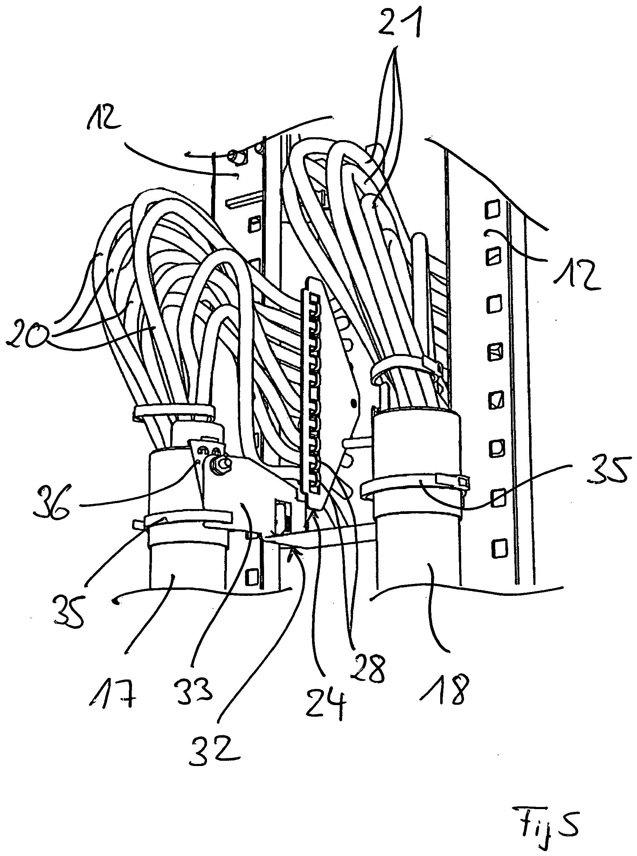

Wie insbesondere Fig. 5 entnommen werden kann, ist an jedem der Abfangabschnitte 33 der Hauptkabelabfangeinrichtung 32 ein Hauptkabel abfangbar, nämlich einerseits das LINE-Hauptkabel 17 sowie andererseits das VOICE-Hauptkabel 18. So zeigt Fig. 5, dass die Hauptkabel 17, 18 am jeweiligen Abfangabschnitt 33 unter Verwendung eines Kabelbinders 35 abfangbar sind. Eine Kabelmantelklemme 36, die im Bereich jedes Hauptkabels 17, 18 einerseits mit dem jeweiligen Hauptkabel 17, 18 und andererseits mit dem jeweiligen Abfangabschnitt 33 der Hauptkabelabfangeinrichtung 32 kontaktiert ist, bewirkt eine Schirmung des jeweiligen Hauptkabels 17, 18.

Die Hauptkabelabfangeinrichtung 32 verfügt über sich an die Abfangabschnitte 33 anschließende, gegenüber denselben um in etwa 90° abgewinkelter Befestigungsabschnitte 37, über welche die Hauptkabelabfangeinrichtung 32 unter Verwendung von Schrauben 38 lösbar mit den Streben 12 des Verteilergestells 10 befestigbar ist. Weiterhin verfügt die Hauptkabelabfangeinrichtung 32 im Bereich jedes Befestigungsabschnitts 37 über Einhängabschnitte 39 (siehe Fig. 8), wobei ein Verteilerblock 10 über seine Aufnahmeeinrichtung 13 in die an den Streben 12 befestigte Hauptkabelabfangeinrichtung 32, nämlich in deren Einhängabschnitte 39, einhängbar ist.

Ein in die Einhängabschnitte 39 der Hauptkabelabfangeinrichtung 32 eingehängter Verteilerblock 11 ist über Schrauben 40 lösbar mit dem Verteilergestell 10 verbindbar bzw. an demselben befestigbar. Bei einem in die Hauptkabelabfangeinrichtung 32 eingehängten Verteilerblock 11 ist in einem unteren Bereich einer Rückwand der Aufnahmeeinrichtung 13 des Verteilerblocks 11 benachbart zu beiden Seitenwänden derselben jeweils ein Abfangabschnitt 33 der Hauptkabelabfangeinrichtung 32 positioniert.

Bei der Bereitstellung einer strukturierten Verkabelung wird bei dem Verteilerblock des Ausführungsbeispiels so vorgegangen, dass zuerst die Hauptkabelabfangeinrichtung 32 an dem Verteilergestell 10, nämlich an dessen Streben 12, lösbar befestigt wird. Hierzu dienen, wie bereits erwähnt, die Schrauben 38, die sich durch die Befestigungsabschnitte 37 der Hauptkabelabfangeinrichtung 32 erstrecken.

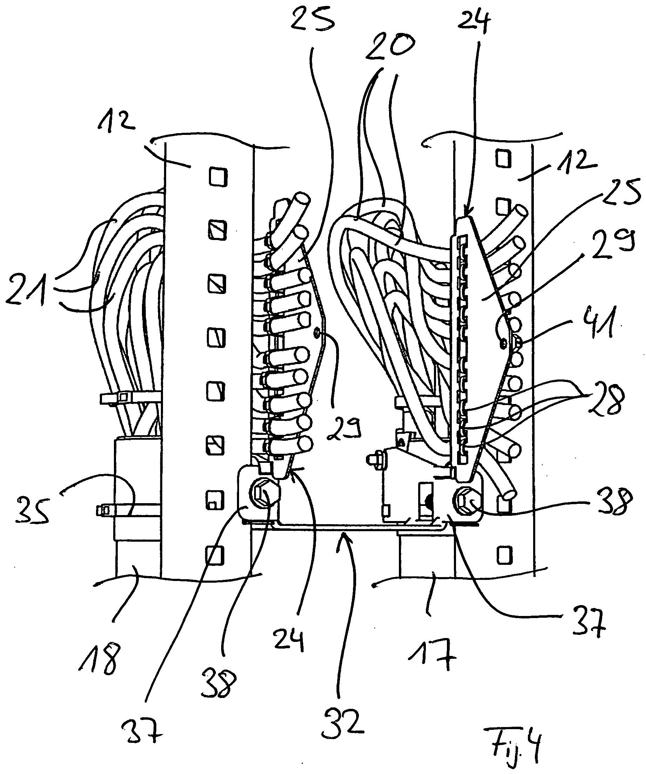

Anschließend werden an den Abfangabschnitten 33 der Hauptkabelabfangeinrichtung 32 die Hauptkabel 17, 18 mit Hilfe der Kabelbinder 35 abgefangen. Im Anschluss hieran werden die Bündeladern 20, 21 der abgefangenen Hauptkabel 17, 18 an jeweils einer Aderbündelabfangeinrichtung 24 abgefangen, wobei dann der Zustand gemäß Fig. 4 und 5 erreicht ist.

Anschließend werden die in den abgefangenen Aderbündeln 20, 21 verlaufenden Datensignalleitungen der beiden Hauptkabel 17, 18 über die entsprechenden Drahtführungskanäle der Drahtführungselemente 14 den als IDC-Kontakten ausgebildeten Anschlusselementen 16 der Funktionselemente 15 zugeführt und an denselben angeschlossen, wobei sodann die Aderbündelabfangeinrichtung 24 an den Seitenwänden der Aufnahmeeinrichtung 13 des Verteilerblocks 11 befestigt werden.

Darauffolgend wird der Verteilerblock 11 mit den an die Anschlusselemente 16 angeschlossenen Datensignalleitungen und den an den Seitenwänden der Aufnahmeeinrichtung 13 befestigten Aderbündelabfangeinrichtungen 24 in die Hauptkabelabfangeinrichtung 32 eingehängt und am Verteilergestell 10, nämlich an den Streben 12, unter Verwendung der Schrauben 40 lösbar befestigt. Anschließend können noch die Datensignalleitungen in die Einfädelabschnitte 31 der Führungseinrichtungen 30 eingefädelt werden.

Nach dem Einhängen des Verteilerblocks in die Hauptkabelabfangeinrichtung verlaufen die Aderbündel 20, 21 der Hauptkabel 17, 18 zwischen den Abfangabschnitten 33 der Hauptkabelabfangeinrichtung 32 und der jeweiligen Aderbündelabfangeinrichtung 24 mit einer gewissen Überlänge, die dazu genutzt werden kann, um einen Verteilerblock 11 zu Wartungszwecken vom Verteilergestell 10 zu demontieren, aus der Hauptabfangeinrichtung 32 auszuhängen und unter Beibehaltung des Anschlusses der Datensignalleitungen an die als IDC-Kontakte ausgebildeten Anschlusselemente 16 der Funktionselemente 15 nach vorne aus dem Verteilergestell 10 herauszuziehen.

**Bezugszeichenliste**

| | | | |
|---|---|---|---|
| 10 | Verteilergestell | 39 | Einhängabschnitt |
| 11 | Verteilerblock | 40 | Schraube |
| 12 | Strebe | 41 | Mutter |
| 13 | Aufnahmeeinrichtung | 42 | Aderbündelabfangeinrichtung |
| 14 | Drahtführungselement | 43 | Aderbündelabfangeinrichtung |
| 15 | Funktionselement | 44 | Abschnitt |
| 16 | Anschlusselement | 45 | Ausnehmung |
| 17 | LINE-Hauptkabel | | |
| 18 | VOICE-Hauptkabel | | |
| 19 | DSLAM-Hauptkabel | | |
| 20 | LINE-Aderbündel | | |
| 21 | VOICE-Aderbündel | | |
| 22 | DSLAM-Aderbündel | | |
| 23 | Stecker | | |
| 24 | Aderbündelabfangeinrichtung | | |
| 25 | Grundkörper | | |
| 26 | Ausnehmung | | |
| 27 | Materialsteg | | |
| 28 | Kabelbinder | | |
| 29 | Ausnehmung | | |
| 30 | Führungseinrichtung | | |
| 31 | Einfädelabschnitt | | |
| 32 | Hauptkabelabfangeinrichtung | | |
| 33 | Abfangabschnitt | | |
| 34 | Quersteg | | |
| 35 | Kabelbinder | | |
| 36 | Kabelmantelklemme | | |
| 37 | Befestigungsabschnitt | | |
| 38 | Schraube | | |

## Patentansprüche

1. Verteilereinrichtung, nämlich Verteilerblock, einer Telekommunikationsanlage, mit einer insbesondere als Aufnahmewanne ausgebildeten Aufnahmeeinrichtung, wobei die Aufnahmeeinrichtung mehrere Funktionselemente und mehrere Drahtführungselemente aufnimmt, wobei die Funktionselemente insbesondere als IDC-Kontakte ausgebildete Anschlusselemente zum Anschluss von Datensignalleitungen aufweisen, und wobei den Anschlusselementen der Funktionselemente zu Aderbündeln zusammengefasste Datensignalleitungen mindestens eines Hauptkabels derart zuführbar sind, dass die Datensignalleitungen an die Anschlusselemente der Funktionselemente anschließbar sind, **gekennzeichnet durch** mindestens eine Aderbündelabfangeinrichtung (24; 42; 43), wobei an der oder jeder Aderbündelabfangeinrichtung übereinander bzw. nebeneinander mehrere Aderbündel (20, 21) eines Hauptkabels (17, 18) abfangbar sind, wobei die oder jede Aderbündelabfangeinrichtung (24; 42; 43) einen Grundkörper (25) aufweist, und wobei die oder jede Aderbündelabfangeinrichtung (24; 42; 43) derart an einer Seitenwand der Aufnahmeeinrichtung (13) lösbar befestigbar ist, dass sich der Grundkörper (25) in etwa parallel zu einer Seitenwand der Aufnahmeeinrichtung erstreckt.

2. Verteilereinrichtung nach Anspruch 1, **dadurch gekennzeichnet, dass** an beiden sich gegenüberliegenden Seitenwänden der Aufnahmeeinrichtung (13) jeweils eine Aderbündelabfangeinrichtung (24; 42; 43) befestigbar ist, um an der jeweiligen Aderbündelabfangeinrichtung (24; 42; 43) alle Aderbündel (20, 21) desjenigen Hauptkabels (17, 18) abzufangen, deren Datensignalleitungen über an dieser Seitenwand mündende Drahtführungskanäle der Drahtführungselemente (14) den Anschlusselementen (16) der Funktionselemente (15) zuführbar sind.

3. Verteilereinrichtung nach Anspruch 1 oder 2, **dadurch gekennzeichnet, dass** der Grundkörper (25) der oder jeder Aderbündelabfangeinrichtung (24; 42; 43) in einem an der Aufnahmeeinrichtung befestigten Zustand flächig an der jeweiligen Seitenwand der Aufnahmeeinrichtung anliegt.

4. Verteilereinrichtung nach einem oder mehreren der Ansprüche 1 bis 3, **dadurch gekennzeichnet, dass** die Aderbündelabfangeinrichtung (24; 42; 43) mehrere Ausnehmungen (26) aufweist, durch die zur Abfangung der Aderbündel unter Umschlingung derselben Kabelbinder führbar sind.

5. Verteilereinrichtung nach einem oder mehreren der Ansprüche 1 bis 4, **gekennzeichnet durch** eine Hauptkabelabfangeinrichtung (32), an der mindestens ein Hauptkabel (17, 18) abfangbar ist.

6. Verteilereinrichtung nach Anspruch 5, **dadurch gekennzeichnet, dass** die Hauptkabelabfangeinrichtung (32) zwei Abfangabschnitte (33) für jeweils ein Hauptkabel (17, 18) aufweist und derart an der Aufnahmeeinrichtung angreift, dass in einem unteren Bereich einer Rückwand der Aufnahmeeinrichtung benachbart zu beiden Seitenwänden derselben jeweils ein Abfangabschnitt (33) der Hauptkabelabfangeinrichtung (32) zur Abfangung jeweils eines Hauptkabels positioniert ist.

7. Verteilereinrichtung nach Anspruch 5 oder 6, **dadurch gekennzeichnet, dass** die Hauptkabelabfangeinrichtung (32) an einem Verteilergestell insbesondere über Schrauben lösbar befestigbar ist, dass die Hauptkabelabfangeinrichtung Einhängabschnitte (39) für die Aufnahmeeinrichtung aufweist, um die Aufnahmeeinrichtung lösbar in die am Verteilergestell befestigte Hauptkabelabfangeinrichtung einzuhängen, und dass die in die Hauptkabelabfangeinrichtung eingehängte Aufnahmeeinrichtung am Verteilergestell insbesondere über Schrauben lösbar befestigbar ist.

8. Verteilereinrichtung nach einem oder mehreren der Ansprüche 1 bis 7, **dadurch gekennzeichnet, dass** an beiden sich gegenüberliegenden Seitenwänden der Aufnahmeeinrichtung (13) jeweils eine Führungseinrichtung (30) für die Datensignalleitungen derjenigen Aderbündel angreift, die im Bereich der jeweiligen Seitenwand an der dieser Seitenwand zugeordneten Aderbündelabfangeinrichtung (24) abgefangen sind, wobei jede Führungseinrichtung (30) mehrere Einfädelabschnitte (31) aufweist, sodass die Datensignalleitungen nach Abfangung der jeweiligen Aderbündel an der jeweiligen Aderbündelabfangeinrichtung sowie nach dem Anschließen derselben an Anschlusselementen der Funktionselemente in die Einfädelabschnitte der jeweiligen Führungseinrichtung einfädelbar sind.

9. Verteilereinrichtung nach einem oder mehreren der Ansprüche 1 bis 8, **dadurch gekennzeichnet, dass**
a) zuerst die Hauptkabelabfangeinrichtung an einem Verteilergestell lösbar befestigbar ist;
b) anschließend das oder jedes Hauptkabel an jeweils einem der Abfangabschnitte der Hauptkabelabfangeinrichtung abfangbar ist;
c) darauffolgend die Aderbündel des oder jedes abgefangenen Hauptkabels an jeweils einer Aderbündelabfangeinrichtung abfangbar sind;
d) anschließend die Datensignalleitungen der abgefangenen Aderbündel des oder jedes Hauptkabels über Drahtführungskanäle der Drahtführungselemente Anschlusselementen der Funktionselemente einer Verteilereinrichtung zuführbar und an denselben anschließbar sind, wobei sodann die oder jede Aderbündelabfangeinrichtung an der Verteilereinrichtung befestigbar ist;
e) darauffolgend die Verteilereinrichtung mit den an die Anschlusselemente angeschlossenen Datensignalleitungen in die Hauptkabelabfangeinrichtung einhängbar und an dem Verteilergestell lösbar befestigbar ist.

10. Verteilereinrichtung, nämlich Verteilerblock, einer Telekommunikationsanlage, mit einer Aufnahmeeinrichtung, wobei die Aufnahmeeinrichtung mehrere Funktionselemente, mehrere mit den Funktionselementen zusammenwirkende xDSL-Splittereinrichtungen und mehrere Drahtführungselemente aufnimmt, wobei die Funktionselemente Anschlusselemente aufweisen, wobei an den Anschlusselementen zu Aderbündeln zusammengefasste LINE-Datensignalleitungen, die der Übertragung kombinierter Sprachdaten-Rechnerdatensignale dienen, eines LINE-Hauptkabels sowie zu Aderbündeln zusammengefasste VOICE-Datensignalleitungen, die ausschließlich der Übertragung niederfrequenter Sprachdatensignale dienen, eines VOICE-Hauptkabels anschließbar sind, wobei der Aufnahmeeinrichtung Steckverbinderelemente zugeordnet sind, an die DSLAM-Datensignalleitungen, die ausschließlich der Übertragung hochfrequenter Rechnerdatensignale dienen, mehrerer DSLAM-Hauptkabel anschließbar sind, und wobei über die xDSL-Splittereinrichtungen kombinierte Sprachdaten-Rechnerdatensignale in Sprachdatensignale und Rechnerdatensignale auftrennbar und Sprachdatensignale und Rechnerdatensignale zu einem kombinierten Sprachdaten-Rechnerdatensignale zusammenführbar sind, **dadurch gekennzeichnet, dass** jeder Seitenwand der Aufnahmeeinrichtung jeweils eine Aderbündelabfangeinrichtung (24; 42; 43) zugeordnet ist, wobei an der einer ersten Seitenwand zugeordneten Aderbündelabfangeinrichtung (24; 42; 43) übereinander bzw. nebeneinander mehrere Aderbündel (20) des LINE-Hauptkabels (17) abfangbar sind, und wobei an der einer zweiten Seitenwand zugeordneten Aderbündelabfangeinrichtung (24; 42; 43) übereinander bzw. nebeneinander mehrere Aderbündel (21) des VOICE-Hauptkabels (18) abfangbar sind, und wobei jede Aderbündelabfangeinrichtung (24; 42; 43) einen Grundkörper (25) aufweist, und wobei jede Aderbündelabfangeinrichtung (24; 42; 43) derart an der jeweiligen Seitenwand lösbar befestigbar ist, dass sich der Grundkörper (25) in etwa parallel zu einer Seitenwand der Aufnahmeeinrichtung (13) erstreckt.

11. Verteilereinrichtung nach Anspruch 10, **gekennzeichnet durch** Merkmale nach einem oder mehreren der Ansprüche 2 bis 9.

## Claims

1. Distribution device, specifically distribution block, of a telecommunications system, comprising a receiving device which is, in particular, in the form of a receiving trough, wherein the receiving device receives a plurality of functional elements and a plurality of wire guiding elements, wherein the functional elements have connection elements, in particular in the form of IDC contacts, for the connection of data signal lines, and wherein data signal lines, which are combined to form core bundles, of at least one main cable can be supplied to the connection elements of the functional elements in such a way that the data signal lines can be connected to the connection elements of the functional elements, **characterized by** at least one core bundle clamping device (24; 42; 43), wherein a plurality of core bundles (20, 21) of a main cable (17, 18) can be clamped one above the other or next to one another on the or each core bundle clamping device, wherein the or each core bundle clamping device (24; 42; 43) has a main body (25), and wherein the or each core bundle clamping device (24; 42; 43) can be detachably fastened to a side wall of the receiving device (13) in such a way that the main body (25) extends approximately parallel to a side wall of the receiving device.

2. Distribution device according to Claim 1, **characterized in that** a core bundle clamping device (24; 42; 43) can be fastened on the two opposite side walls of the receiving device (13) in each case in order to clamp at the respective core bundle clamping device (24; 42; 43) all of the core bundles (20, 21) of that main cable (17, 18) of which the data signal lines can be supplied to the connection elements (16) of the functional elements (15) by means of wire guiding channels of the wire guiding elements (14), which wire guiding channels issue at the said side wall.

3. Distribution device according to Claim 1 or 2, **characterized in that** the main body (25) of the or each core bundle clamping device (24; 42; 43) bears flat against the respective side wall of the receiving device in a state in which the or each said core bundle clamping device is fastened to the receiving device.

4. Distribution device according to one or more of Claims 1 to 3, **characterized in that** the core bundle clamping device (24; 42; 43) has a plurality of recesses (26) through which cable ties can be guided for clamping the core bundles by wrapping around the said core bundles.

5. Distribution device according to one or more of Claims 1 to 4, **characterized by** a main cable clamping device (32) at which at least one main cable (17, 18) can be clamped.

6. Distribution device according to Claim 5, **characterized in that** the main cable clamping device (32) has two clamping sections (33) for in case one main cable (17, 18) and acts on the receiving device in such a way that in each case one clamping section (33) of the main cable clamping device (32) for clamping in each case one main cable is positioned in a lower region of a rear wall of the receiving device adjacent to the two side walls of the said receiving device.

7. Distribution device according to Claim 5 or 6, **characterized in that** the main cable clamping device (32) can be detachably fastened to a distribution frame, in particular by means of screws, **in that** the main cable clamping device has suspension sections (39) for the receiving device in order to suspend the receiving device detachably in the main cable clamping device which is fastened to the distribution frame, and **in that** the receiving device which is suspended in the main cable clamping device can be detachably fastened to the distribution frame, in particular by means of screws.

8. Distribution device according to one or more of Claims 1 to 7, **characterized in that** in each case one guiding device (30) for the data signal lines of those core bundles which are clamped in the region of the respective side wall on the core bundle clamping device (24) which is associated with this side wall acts on the two opposite side walls of the receiving device (13), wherein each guiding device (30) has a plurality of threading-in sections (31), so that the data signal lines can be threaded into the threading-in sections of the respective guiding device after the respective core bundles are clamped at the respective core bundle clamping device and also after the said core bundles are connected to connection elements of the functional elements.

9. Distribution device according to one or more of Claims 1 to 8, **characterized in that**
a) first the main cable clamping device can be detachably fastened to a distribution frame;
b) then the or each main cable can be clamped at in each case one of the clamping sections of the main cable clamping device;
c) subsequently the core bundles of the or each clamped main cable can be clamped at in each case one core bundle clamping device;
d) then the data signal lines of the clamped core bundles of the or each main cable can be supplied to connection elements of the functional elements of a distribution device by means of wire guiding channels of the wire guiding elements and can be connected to the same, wherein then the or each core bundle clamping device can be fastened to the distribution device;
e) subsequently the distribution device with the data signal lines which are connected to the connection elements can be suspended in the main cable clamping device and can be detachably fastened to the distribution frame.

10. Distribution device, specifically distribution block, of a telecommunications system, comprising a receiving device, wherein the receiving device accommodates a plurality of functional elements, a plurality of xDSL splitter devices which interact with the functional elements, and a plurality of wire guiding elements, wherein the functional elements have connection elements, wherein LINE data signal lines, which are combined to form core bundles and which serve to transmit combined voice data/computer data signals, of a LINE main cable and also VOICE data signal lines, which are combined to form core bundles and serve solely to transmit low-frequency voice data signals, of a VOICE main cable can be connected to the connection elements, wherein plug connector elements are associated with the receiving device, it being possible for DSLAM data signal lines, which serve solely to transmit high-frequency computer data signals, of a plurality of DSLAM main cables can be connected to said plug connector elements, and wherein voice data/computer data signals which are combined by means of the xDSL splitter devices can be separated into voice data signals and computer data signals, and voice data signals and computer data signals can be combined to form a combined voice data/computer data signal, **characterized in that** in each case one core bundle clamping device (24; 42; 43) is associated with each side wall of the receiving device, wherein a plurality of core bundles (20) of the LINE main cable (17) can be clamped at the core bundle clamping device (24; 42; 43), which is associated with a first side wall, one above the other or next to one another, and wherein a plurality of core bundles (21) of the VOICE main cable (18) can be clamped at the core bundle clamping device (24; 42; 43), which is associated with a second side wall, one above the other one or next to one another, and wherein each core bundle clamping device (24; 42; 43) has a main body (25), and wherein each core bundle clamping device (24, 42; 43) can be detachably fastened to the respective side wall in such a way that the main body (25) extends approximately parallel to a side wall of the receiving device (13).

11. Distribution device according to Claim 10, **characterized by** features according to one or more of Claims 2 to 9.

## Revendications

1. Dispositif de répartition, plus précisément, bloc répartiteur, d'une installation de télécommunication, comprenant un dispositif d'accueil notamment réalisé sous la forme d'un bac d'accueil, dans lequel le dispositif d'accueil reçoit plusieurs éléments fonctionnels et plusieurs éléments de guidage de conducteur, dans lequel les éléments fonctionnels comportent notamment des éléments de raccordement réalisés sous la forme de contacts IDC pour le raccordement de lignes de signaux de données, et dans lequel les lignes de signaux de données rassemblées en faisceaux de conducteurs d'au moins un câble principal peuvent être acheminées vers les éléments de raccordement de manière à ce que les lignes de signaux de données puissent être raccordées aux éléments de raccordement des éléments fonctionnels, **caractérisé par** au moins un dispositif d'interception de faisceau de conducteurs (24 ; 42 ; 43), dans lequel plusieurs faisceaux de conducteurs (20, 21) d'un câble principal (17, 18) peuvent être interceptés l'un sur l'autre ou côte à côte au niveau du ou de chaque dispositif d'interception de faisceau de conducteurs, dans lequel le ou chaque dispositif d'interception de faisceau de conducteurs (24 ; 42 ; 43) comporte un corps de base (25) et dans lequel le ou chaque dispositif d'interception de faisceau de conducteurs (24 ; 42 ; 43) peut être fixé de manière amovible à une paroi latérale du dispositif d'accueil (13) de manière à ce que le corps de base (25) s'étende sensiblement parallèlement à une paroi latérale du dispositif d'accueil.

2. Dispositif de répartition selon la revendication 1, **caractérisé en ce qu'**un dispositif d'interception de faisceau de conducteurs (24 ; 42 ; 43) peut respectivement être fixé aux deux parois latérales mutuellement opposées du dispositif d'accueil (13) afin d'intercepter, au niveau du dispositif d'interception de faisceau de conducteurs (24 ; 42 ; 43) respectif, tous les faisceaux de conducteurs (20, 21) du câble principal (17, 18) dont les lignes de signaux de données peuvent être acheminées, par l'intermédiaire de canaux de guidage de conducteurs débouchant sur ladite paroi latérale des éléments de guidage de conducteurs (14), vers les éléments de raccordement (16) des éléments fonctionnels (15).

3. Dispositif de répartition selon la revendication 1 ou 2, **caractérisé en ce que** le corps de base (25) du ou de chaque dispositif d'interception de faisceau de conducteurs (24 ; 42 ; 43) est disposé, dans un état fixé au dispositif d'accueil, de manière à affleurer à la paroi latérale respective du dispositif d'accueil.

4. Dispositif de répartition selon l'une ou plusieurs des revendications 1 à 3, **caractérisé en ce que** le dispositif d'interception de faisceau de conducteurs (24 ; 42 ; 43) présente plusieurs évidements (26) à travers lesquels le faisceau de conducteurs peut être guidé par enveloppement par un même serre-câble à des fins d'interception du faisceau de conducteurs.

5. Dispositif de répartition selon l'une ou plusieurs des revendications 1 à 4, **caractérisé par** un dispositif d'interception de câble principal (32) au niveau duquel au moins un câble principal (17, 18) peut être intercepté.

6. Dispositif de répartition selon la revendication 5, **caractérisé en ce que** le dispositif d'interception de câble principal (32) comporte deux sections d'interception (33) respectivement destinées à un câble principal (17, 18) et vient en prise avec le dispositif d'accueil de manière à ce que, dans une région inférieure d'une paroi arrière du dispositif d'accueil, une section d'interception (33) du dispositif d'interception de câble principal (32) soit positionnée au voisinage de ses deux parois latérales pour intercepter un câble principal respectif.

7. Dispositif de répartition selon la revendication 5 ou 6, **caractérisé en ce que** le dispositif d'interception de câble principal (32) peut être fixé de manière amovible à un châssis de répartition par l'intermédiaire de vis, **en ce que** le dispositif d'interception de câble principal comporte des sections d'accrochage (39) pour le dispositif d'accueil afin d'accrocher le dispositif d'accueil de manière amovible dans le dispositif d'interception de câble principal fixé au châssis de répartition, et **en ce que** le dispositif d'accueil accroché dans le dispositif d'interception de câble principal peut être fixé de manière amovible au châssis de répartition, notamment par l'intermédiaire de vis.

8. Dispositif de répartition selon l'une ou plusieurs des revendications 1 à 7, **caractérisé en ce qu**'un dispositif de guidage (30) respectif vient en prise avec les deux parois latérales opposées l'une à l'autre du dispositif d'accueil (13) pour les lignes de signaux de données des faisceaux de conducteurs qui sont interceptés dans la région de la paroi latérale respective au niveau du dispositif d'interception de faisceau de conducteurs (24) qui est associé à ladite paroi latérale, dans lequel chaque dispositif de guidage (30) comporte plusieurs sections d'enfilage (31), de manière à ce que les lignes de signaux de données puissent être enfilées, après l'interception du faisceau de conducteurs respectif sur le dispositif d'interception de faisceau de conducteurs respectif, après le raccordement de celui-ci à des éléments de raccordement des éléments fonctionnels dans la section d'enfilage du dispositif de guidage respectif.

9. Dispositif de répartition selon l'une ou plusieurs des revendications 1 à 8, **caractérisé en ce que**
a) le dispositif d'interception de câble principal peut être fixé de manière amovible à un châssis de répartition ;
b) ledit ou chaque câble principal peut être intercepté sur l'une des sections d'interception du dispositif d'interception de câble principal ;
c) les faisceaux de conducteurs du ou de chaque câble principal intercepté peuvent ensuite être interceptés sur un dispositif d'interception de faisceau de conducteurs respectif ;
d) les lignes de signaux de données du faisceau de conducteurs interceptés dudit ou de chaque câble principal peuvent être acheminées, par l'intermédiaire de canaux de guidage de conducteurs des éléments de guidage de conducteurs, vers des éléments de raccordement des éléments fonctionnels d'un dispositif de répartition, et peuvent être raccordés à celui-ci, dans lequel le ou chaque dispositif d'interception de faisceau de conducteurs peut ensuite être fixé au dispositif de répartition ;
e) le dispositif de répartition peut ensuite être accroché dans le dispositif d'interception de câble principal avec les lignes de signaux de données raccordées aux éléments de raccordement et peut être fixé de manière amovible au châssis de répartition.

10. Dispositif de répartition, plus précisément, bloc répartiteur, d'une installation de télécommunication, comprenant un dispositif d'accueil, dans lequel le dispositif d'accueil reçoit plusieurs éléments fonctionnels, plusieurs dispositifs séparateurs xDSL coopérant avec les éléments fonctionnels et plusieurs éléments de guidage de conducteurs, dans lequel les éléments fonctionnels comportent des éléments de raccordement, dans lequel il est possible de raccorder aux éléments de raccordement, des lignes de signaux de données LINE rassemblées en des faisceaux de conducteurs qui sont utilisés pour la transmission de signaux de données vocales-données de calculateur combinés, d'un câble principal LINE, et des lignes de signaux de données VOICE rassemblées en des faisceaux de conducteurs qui sont utilisés exclusivement pour la transmission de signaux de données vocales à basse fréquence, d'un câble principal VOICE, dans lequel des éléments connecteurs sont associés au dispositif d'accueil, plusieurs câbles principaux de DSLAM peuvent être raccordés aux lignes de signaux de données DSLAM, qui sont exclusivement utilisées pour la transmission de signaux de données de calculateur à haute fréquence, et dans lequel des signaux de données vocales - de données de calculateur combinés peuvent être séparés par l'intermédiaire des dispositifs séparateurs xDSL en des signaux de données vocales et en des signaux de données de calculateur, et les signaux de données vocales et les signaux de données de calculateur peuvent être réunis en des signaux de données vocales - de données de calculateur combinés, **caractérisé en ce qu**'à chaque paroi latérale du dispositif d'accueil est associé un dispositif d'interception de faisceau de conducteurs respectif (24 ; 42 ; 43), dans lequel plusieurs faisceaux de conducteurs (20) du câble principal LINE (17) peuvent être interceptés les uns sur les autres ou côte à côte sur le dispositif d'interception de faisceau de conducteurs (24 ; 42 ; 43) associé à une première paroi latérale, et dans lequel plusieurs faisceaux de conducteurs (21) du câble principal VOICE (18) peuvent être interceptés les uns sur les autres ou côte à côte sur le dispositif d'interception de faisceau de conducteurs (24 ; 42 ; 43) associé à une seconde paroi latérale, et dans lequel chaque dispositif d'interception de faisceau de conducteurs (24 ; 42 ; 43) comporte un corps de base (25), et dans lequel chaque dispositif d'interception de faisceau de conducteurs (24 ; 42 ; 43) peut être fixé de manière amovible à la paroi latérale respective de manière à ce que le corps de base (25) s'étende sensiblement parallèlement à une paroi latérale du dispositif d'accueil (13).

11. Dispositif de répartition selon la revendication 10, **caractérisé par** les éléments caractéristiques d'une ou plusieurs des revendications 2 à 9.
